# EUROPEAN PATENT APPLICATION

(11) **EP 4 325 901 A1**
(43) Date of publication of application: **21.02.2024**
(21) Application number: 22815183.3
(22) Date of filing: 27.05.2022
(51) Int. Cl.: H04W 4/02, H04W 64/00

(54) **SERVICE ACCESSING METHOD AND APPARATUS, AND SYSTEM**

(30) Priority: 03.06.2021 CN 202110621596
(71) Applicant: Huawei Technologies Co., Ltd., Shenzhen, Guangdong 518129 (CN)
(72) Inventor: DING, Hui, Shenzhen, Guangdong 518129 (CN); WANG, Yixing, Shenzhen, Guangdong 518129 (CN); LIU, Jiaqi, Shenzhen, Guangdong 518129 (CN)
(74) Representative: Epping - Hermann - Fischer
(86) International application number: PCT/CN2022/095647
(87) International publication number: WO 2022/253137

(57) **Abstract**

This application provides a service access method, including: A visited policy control function network element determines regional access information of a terminal device, where the regional access information includes an identifier of a service in an area, and the policy control function network element is a policy control function network element responsible for access and mobility management; and the visited policy control function network element sends the regional access information to a visited session management network element, where the regional access information is used by the visited session management network element to provide access to the service in the area for the terminal device. In the technical solution of this application, the visited policy control function network element responsible for access and mobility management sends the regional access information of the terminal device to the visited session management network element. The visited session management network element provides access to the service in the area for the terminal device based on the regional access information, so that a roaming terminal device can access the service in the area of the visited network without affecting a home network.

## Description

This application claims priority to Chinese Patent Application No. 202110621596.7, filed with the China National Intellectual Property Administration on June 3, 2021 and entitled "SERVICE ACCESS METHOD AND APPARATUS, AND SYSTEM", which is incorporated herein by reference in its entirety.

### TECHNICAL FIELD

This application relates to the communication field, and in particular, to a service access method and apparatus, and a system.

### BACKGROUND

In an actual commercial scenario, a commercial organization (for example, a park or a museum) may additionally provide a specific-area/private-network service for free during ticket purchase (online or offline). A subscriber (for example, a terminal device) may subscribe to the service online or offline, and may also subscribe to the service before or during ticket purchase. This process is not limited to that the subscriber is in or out of an area. When the subscriber is in the area, a core network may insert an uplink classifier (uplink classifier, UL CL)/local user plane function (user plane function, UPF) network element for a subscriber session, to implement local breakout of a service in the area.

The service in the area in the foregoing scenario is usually available only to an intra-province subscriber or a subscriber in China, because subscription information of an inter-province or international roaming subscriber is in a home province or operator. Currently, there is no mechanism that supports a roaming subscriber to subscribe to a service in an area of a visited network. In international roaming and inter-province roaming scenarios, directly inserting a UL CL and a local UPF in a visited network according to a local policy is not supported.

### SUMMARY

This application provides a service access method and apparatus, and a system, to provide access to a service in an area for a roaming subscriber (for example, a terminal device) in a visited network without affecting a home network.

According to a first aspect, a service access method is provided. The method includes: A visited policy control function network element determines regional access information of a terminal device, where the regional access information includes an identifier of a service in an area, and the policy control function network element is a policy control function network element responsible for access and mobility management; and the visited policy control function network element sends the regional access information to a visited session management network element, where the regional access information is used by the visited session management network element to provide access to the service in the area for the terminal device.

According to the technical solution of this application, the visited policy control function network element may send the regional access information of the terminal device to the visited session management network element, and the visited session management network element may provide access to the service in the area for the terminal device based on the regional access information. This helps a roaming subscriber (for example, a terminal device) to access the service in the area of the visited network without affecting a home network.

That a visited policy control function network element determines regional access information of a terminal device includes: The policy control function network element receives the regional access information from an application function network element, a network exposure function network element, or a unified database network element; or the policy control function network element obtains pre-configured regional access information.

With reference to the first aspect, in some implementations of the first aspect, the method further includes: The policy control function network element determines that the terminal device has subscribed to the service.

With reference to the first aspect, in some implementations of the first aspect, the method further includes: The policy control function network element obtains location information of the terminal device; and the policy control function network element determines that the terminal device is in a range of the area based on the location information and the regional access information of the terminal device.

According to the technical solution of this application, before sending the regional access information of the terminal device to the visited session management network element, the visited policy control function network element may determine that the terminal device can access a service in the area. This helps the roaming subscriber (for example, the terminal device) to access the service in the area of the visited network without affecting the home network.

The regional access information further includes identification information of a regional access point, and the identification information of the regional access point identifies an available access point in the area.

Optionally, the regional access information may further include at least one of the following information: routing information of the regional access point, where the routing information of the regional access point indicates a routing address of the regional access point; and service area information of the regional access point, where the service area information indicates an area range in which the regional access point is available.

According to the technical solution of this application, the visited policy control function network element responsible for access and mobility management may send the regional access information of the terminal device to the visited session management network element, and the visited session management network element may complete access for the terminal device based on the identification information of the regional access point in the regional access information. This helps the roaming subscriber (for example, the terminal device) to access the service in the area of the visited network without affecting the home network.

With reference to the first aspect, in some implementations of the first aspect, that a policy control function network element sends regional access information to a session management network element includes: The policy control function network element sends the regional access information to the session management network element through an access and mobility management network element.

With reference to the first aspect, in some implementations of the first aspect, the method further includes: The policy control function network element sends session feature information to the access and mobility management network element, where the session feature information is used by the access and mobility management network element to determine the session management network element.

The session feature information includes a data network name DNN and/or network slice selection assistance information S-NSSAI.

With reference to the first aspect, in some other implementations of the first aspect, the policy control function network element sends the regional access information to the session management network element through a direct communication interface between the policy control function network element and the session management network element. In this way, impact on the session management network element in the visited network may be avoided, and signaling overheads may be reduced.

According to a second aspect, a service access method is provided, including: A visited policy control function network element sends a to-be-replaced DNN list and replacement indication information to an access and mobility management network element, where the to-be-replaced DNN list includes a first DNN, the replacement indication information indicates to replace the first DNN with a second DNN, the first DNN indicates a DNN requested by a terminal device, the second DNN indicates a DNN selected by the policy control function network element for the terminal device, and the policy control function network element is a policy control function network element responsible for access and mobility management; the policy control function network element receives the first DNN from the access and mobility management network element; and the policy control function network element sends the second DNN to the access and mobility management network element based on the first DNN, where the second DNN is used by a visited session management network element to provide access to a service in an area for the terminal device.

According to the technical solution of this application, the visited policy control function network element may replace a data network name requested by the terminal device with a data network name configured in a visited location, and send the configured data network name to the visited session management network element through the access and mobility management network element. This helps a roaming subscriber (for example, a terminal device) to access the service in the area of the visited network without affecting a home network.

With reference to the second aspect, in some implementations of the second aspect, the method further includes: The policy control function network element determines that the terminal device has subscribed to the service.

That the policy control function network element determines that the terminal device has subscribed to the service includes: The policy control function network element determines that the terminal device has subscribed to the service based on subscription information of the terminal device; or the policy control function network element determines that the terminal device has subscribed to the service based on information from an application function network element; or the policy control function network element determines that the terminal device has subscribed to the service based on pre-configured regional access information.

With reference to the second aspect, in some implementations of the second aspect, the method further includes: The policy control function network element obtains location information and the regional access information of the terminal device; and the policy control function network element determines that the terminal device is in a range of the area based on the location information and the regional access information of the terminal device.

According to the technical solution of this application, before sending the regional access information of the terminal device to the visited session management network element, the visited policy control function network element responsible for access and mobility management may determine that the terminal device can access a service in the area. This helps a roaming subscriber (for example, a terminal device) to access the service in the area of the visited network without affecting the home network.

With reference to the second aspect, in some other implementations of the second aspect, after the terminal device accesses the service in the area, the method further includes: The policy control function network element determines that the service of the terminal device expires; and the policy control function network element sends policy association update information to the access and mobility management network element, where the policy association update information indicates to re-establish a session.

According to the technical solution of this application, after the terminal device accesses the service in the visited location, the visited policy control function network element responsible for access and mobility management may indicate the access and mobility management network element to send the session update information to the visited session management network element when determining that the service in the area of the terminal device expires, to help establish a session in time for a roaming subscriber (for example, the terminal device) according to a regular procedure after the service in the area of the visited network expires, thereby improving user experience.

That the policy control function network element determines that the service of the terminal device expires includes: The policy control function network element determines that the service of the terminal device expires based on the subscription information of the terminal device; or the policy control function network element determines that the service of the terminal device expires based on the information from the application function network element; or the policy control function network element determines that the service of the terminal device expires based on the pre-configured regional access information.

With reference to the second aspect, in some other implementations of the second aspect, the method further includes: The policy control function network element obtains the location information and the regional access information of the terminal device; and the policy control function network element determines that the terminal device moves out of the area based on the location information and the regional access information of the terminal device.

With reference to the second aspect, in other implementations of the second aspect, the method further includes: The policy control function network element sends indication information to the access and mobility management network element, where the indication information indicates to delete the to-be-replaced DNN list.

With reference to the second aspect, in still some implementations of the second aspect, after the terminal device accesses the service in the area, the method further includes: The policy control function network element determines that the terminal device newly subscribes to a service in the area; and the policy control function network element sends the policy association update information to the access and mobility management network element, where the policy association update information indicates to re-establish a session.

According to the technical solution of this application, after the terminal device accesses the service in the visited location, the visited policy control function network element responsible for access and mobility management may indicate the access and mobility management network element to send session update information to the session management network element when determining that the terminal device newly subscribes to the service in the area. This helps a roaming subscriber (for example, a terminal device) to access the new service in the area of the visited network in time after newly subscribing to the service.

That the policy control function network element determines that the terminal device newly subscribes to a service in the area includes: The policy control function network element determines that the terminal device newly subscribes to the service in the area based on the subscription information of the terminal device; or the policy control function network element determines that the terminal device newly subscribes to the service in the area based on the information from the application function network element; or the policy control function network element determines that the terminal device newly subscribes to the service in the area based on the pre-configured regional access information.

With reference to the second aspect, in still some implementations of the second aspect, the method further includes: The policy control function network element obtains the location information and the regional access information of the terminal device; and the policy control function network element determines that the terminal device is in a range of the area based on the location information and the regional access information of the terminal device.

With reference to the second aspect, in still some implementations of the second aspect, the method further includes: The policy control function network element sends indication information to the access and mobility management network element, where the indication information indicates to delete the to-be-replaced DNN list.

With reference to the second aspect, in still some implementations of the second aspect, the method further includes: The policy control function network element sends the to-be-replaced DNN list and the replacement indication information to the access and mobility management network element, where the to-be-replaced DNN list includes the first DNN, the replacement indication information indicates to replace the first DNN with the second DNN, the first DNN indicates the DNN requested by the terminal device, the second DNN indicates the DNN selected by the policy control function network element for the terminal device; the policy control function network element receives the first DNN from the access and mobility management network element; and the policy control function network element sends the second DNN to the access and mobility management network element based on the first DNN, where the second DNN is used by a visited session management network element to provide access to the service in the area for the terminal device.

According to a third aspect, a service access method is provided, including: A visited policy control function network element receives regional access information, where the policy control function network element is a policy control function network element responsible for access and mobility management; the policy control function network element determines a user equipment route selection policy URSP rule for a terminal device based on the regional access information, where the URSP rule includes indication information, and the indication information indicates that the URSP rule is used by the terminal device to access a service in a visited area; and the policy control function network element sends the URSP rule to the terminal device.

According to the technical solution of this application, the visited policy control function network element responsible for access and mobility management may send the URSP rule dedicated to the visited location to the terminal device. This helps a roaming subscriber (for example, a terminal device) to access the service in the area of the visited network without affecting a home network. In addition, the policy control function network element does not need to directly or indirectly indicate the session management network element to provide access to the service in the area for the terminal device, thereby reducing signaling overheads and reducing method complexity. That a policy control function network element receives regional access information includes: The policy control function network element receives the regional access information from an application function network element or a network exposure function network element; or the policy control function network element receives the regional access information from a unified database network element.

With reference to the third aspect, in some implementations of the third aspect, the URSP rule further includes a data network name DNN and/or network slice selection assistance information S-NSSAI corresponding to the service that the terminal device accesses in the visited area. According to a fourth aspect, a service access method is provided, including: A terminal device receives a user equipment route selection policy URSP rule from a visited policy control function network element, where the URSP rule includes indication information, and the indication information indicates that the URSP rule is used by the terminal device to access a service in an area; and the terminal device determines that a current access network is a visited network based on that a to-be-initiated service in the area matches the URSP rule, and accesses the service in the area according to the URSP rule.

According to the technical solution of this application, the visited policy control function network element responsible for access and mobility management may send the URSP rule dedicated to the visited location to the terminal device. This helps a roaming subscriber (for example, a terminal device) to access the service in the area of the visited network without affecting a home network. In addition, the policy control function network element does not need to directly or indirectly indicate the session management network element to provide access to the service in the area for the terminal device, thereby reducing signaling overheads and reducing method complexity. With reference to the fourth aspect, in some implementations of the fourth aspect, the URSP rule further includes a data network name DNN and/or network slice selection assistance information S-NSSAI corresponding to the service that the terminal device accesses in the visited area. According to a fifth aspect, a service access apparatus is provided, configured to implement the foregoing methods. The service access apparatus may be the policy control entity in the first aspect or the fourth aspect, or an apparatus including the policy control entity. Alternatively, the service access apparatus may be the terminal device in the fourth aspect, or an apparatus including the terminal device. The service access apparatus includes a corresponding module, unit, or means (means) for implementing the foregoing methods. The module, unit, or mean may be implemented by hardware or software, or implemented by hardware executing corresponding software. The hardware or the software includes one or more modules or units corresponding to the foregoing functions.

With reference to the fifth aspect, in some possible implementations, the service access apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects. The processing module may be, for example, a processor. With reference to the fifth aspect, in some possible implementations, the transceiver module includes a sending module and a receiving module, respectively configured to implement sending and receiving functions in any one of the foregoing aspects and any possible implementation of the foregoing aspects.

According to a sixth aspect, a service access apparatus is provided, including a processor. The processor is configured to: after being coupled to a memory and reading instructions in the memory, perform the method according to any one of the foregoing aspects according to the instructions. The service access apparatus may be the policy control entity in the first aspect or the fourth aspect, or an apparatus including the policy control entity. Alternatively, the service access apparatus may be the terminal device in the fourth aspect, or an apparatus including the terminal device.

With reference to the foregoing sixth aspect, in a possible implementation, the service access apparatus further includes a memory, and the memory is configured to store necessary program instructions and necessary data.

With reference to the foregoing sixth aspect, in a possible implementation, the service access apparatus is a chip or a chip system. Optionally, when the service access apparatus is a chip system, the service access apparatus may include a chip, or may include a chip and another discrete device. According to a seventh aspect, a service access apparatus is provided. The service access apparatus includes: a processor and an interface circuit. The interface circuit is configured to: receive a computer program or instructions and transmit the computer program or instructions to the processor. The processor is configured to execute the computer program or instructions, to enable the service access apparatus to perform the method according to any one of the foregoing aspects. With reference to the seventh aspect, in a possible implementation, the service access apparatus is a chip or a chip system. Optionally, when the service access apparatus is a chip system, the service access apparatus may include a chip, or may include a chip and another discrete device. According to an eighth aspect, a communication system is provided. The communication system includes the policy control function network element according to the first aspect and a visited session management network element that communicates with the policy control function network element.

The session management network element is configured to: receive regional access information of a terminal device from a policy control function network element, where the regional access information includes an identifier of a service in an area; and provide access to the service in the area for the terminal device based on the regional access information.

With reference to the eighth aspect, in some implementations of the eighth aspect, the communication system further includes a mobility management network element.

The mobility management network element is configured to: receive session feature information from the policy control function network element; determine the session management network element based on the session feature information; receive the regional access information of the terminal device from the policy control function network element, where the regional access information includes the identifier of the service in the area; and send the regional access information to the session management network element, where the regional access information is used by the session management network element to provide access to the service in the area for the terminal device.

According to a ninth aspect, a communication system is provided. The communication system includes the policy control function network element according to the second aspect and a mobility management network element that communicates with the policy control function network element. The mobility management network element is configured to: receive a to-be-replaced data network name DNN list and replacement indication information from the policy control function network element, where the to-be-replaced DNN list includes a first DNN, the replacement indication information indicates to replace the first DNN with a second DNN, the first DNN indicates a DNN requested by the terminal device, and the second DNN indicates a DNN selected by the policy control function network element for the terminal device; send the first DNN to the policy control function network element; receive the second DNN from the policy control function network element; send the second DNN to a session management network element; receive policy association update information from the policy control function network element, where the policy association update information indicates to re-establish a session; send the session update information to the session management network element based on the policy association update information; and receive indication information from the policy control function network element, where the indication information indicates to delete the to-be-replaced DNN list.

With reference to the ninth aspect, in some implementations of the ninth aspect, the communication system further includes the session management network element.

The session management network element is configured to: receive the second DNN from the access and mobility management network element; and provide access to the service in the area for the terminal device based on the second DNN.

According to a tenth aspect, a computer program product is provided. The computer program product includes computer program code. When the computer program code is run on a computer, the computer is enabled to perform the methods according to the foregoing aspects.

It should be noted that all or some of the computer program code may be stored in a first storage medium. The first storage medium may be encapsulated together with a processor, or may be encapsulated separately from a processor. This is not specifically limited in embodiments of this application.

According to an eleventh aspect, a computer-readable medium is provided. The computer-readable medium stores program code. When the computer program code is run on a computer, the computer is enabled to perform the methods according to the foregoing aspects.

According to a twelfth aspect, a chip system is provided, including a memory and a processor. The memory is configured to store a computer program. The processor is configured to invoke the computer program from the memory and run the computer program, to enable a communication device on which the chip system is installed to perform the method according to any one of the first aspect to the fourth aspect and the possible implementations of the first aspect to the fourth aspect.

The chip system may include an input chip or interface configured to send information or data, and an output chip or interface configured to receive information or data.

### BRIEF DESCRIPTION OF DRAWINGS

FIG. 1 is a schematic diagram of a system architecture according to an embodiment of this application;
FIG. 2 is a schematic diagram of an example of a communication system to which this application is applicable;
FIG. 3 is a schematic diagram of an example of a service-based architecture of a 5G system to which this application is applicable;
FIG. 4 is a schematic diagram of an example of a home-routed roaming architecture to which this application is applicable;
FIG. 5 is a schematic diagram of an example of a local breakout roaming architecture to which this application is applicable;
FIG. 6 is a schematic diagram of an example of an inter-province roaming architecture to which this application is applicable;
FIG. 7 is a schematic diagram of an example of a roaming architecture to which this application is applicable;
FIG. 8 is a schematic diagram of an example of a local breakout architecture of an access service according to this application;
FIG. 9 is a schematic flowchart of an example of a service access method according to this application;
FIG. 10 is a schematic flowchart of another specific example of a service access method according to this application;
FIG. 11 is a schematic flowchart of another specific example of a service access method according to this application;
FIG. 12 is a schematic flowchart of still another specific example of a service access method according to this application'
FIG. 13 is a schematic flowchart of still another specific example of a service access method according to this application;
FIG. 14 is a schematic flowchart of still another specific example of a service access method according to this application;
FIG. 15 is a schematic diagram of an example of a structure of a service access device according to this application; and
FIG. 16 is a schematic diagram of an example of a structure of a service access apparatus according to this application.

### DESCRIPTION OF EMBODIMENTS

The following describes technical solutions of this application with reference to accompanying drawings.

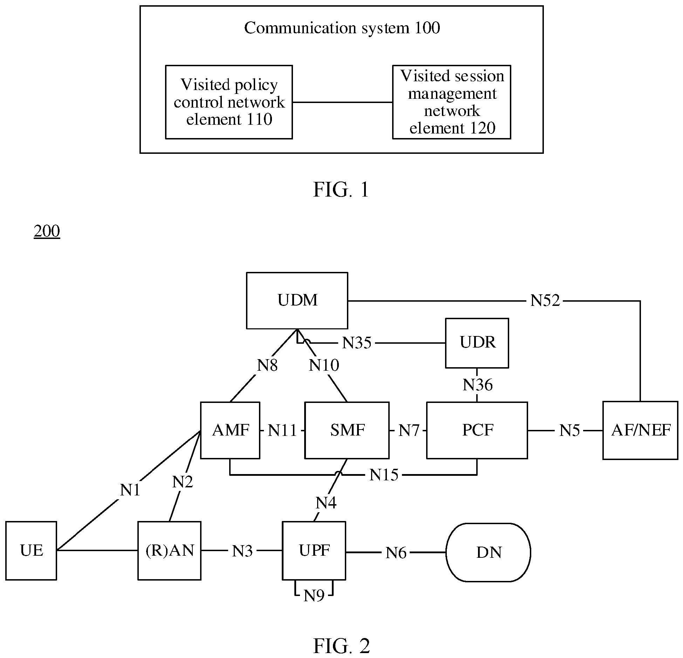

FIG. 1 is a schematic diagram of a communication system according to this application. As shown in FIG. 1, the system includes a visited policy control function network element 110 and a visited session management network element 120. Optionally, the system 100 may further include a mobility management network element 130. The system 100 may be configured to perform a service access method according to embodiments of this application.

The policy control function network element 110 is configured to: determine regional access information of a terminal device, where the regional access information includes an identifier of a service in an area; and send the regional access information to the session management network element 120, where the regional access information is used by the session management network element 120 to provide access to the service in the area for the terminal device.

The session management network element 120 is configured to: receive the regional access information of the terminal device from the policy control function network element 110, where the regional access information includes the identifier of the service in the area; and provide access to the service in the area for the terminal device based on the regional access information. Optionally, the mobility management network element 130 is configured to: receive session feature information from the policy control function network element 110; determine the session management network element 120 based on the session feature information; receive the regional access information of the terminal device from the policy control function network element 110, where the regional access information includes the identifier of the service in the area; and send the regional access information to the session management network element 120, where the regional access information is used by the session management network element 120 to provide access to the service in the area for the terminal device.

For example, according to the communication system provided in this application, the visited policy control function network element responsible for access and mobility management may send the regional access information of the terminal device to the visited session management network element, and the session management network element may provide access to the service in the area for the terminal device based on the regional access information.

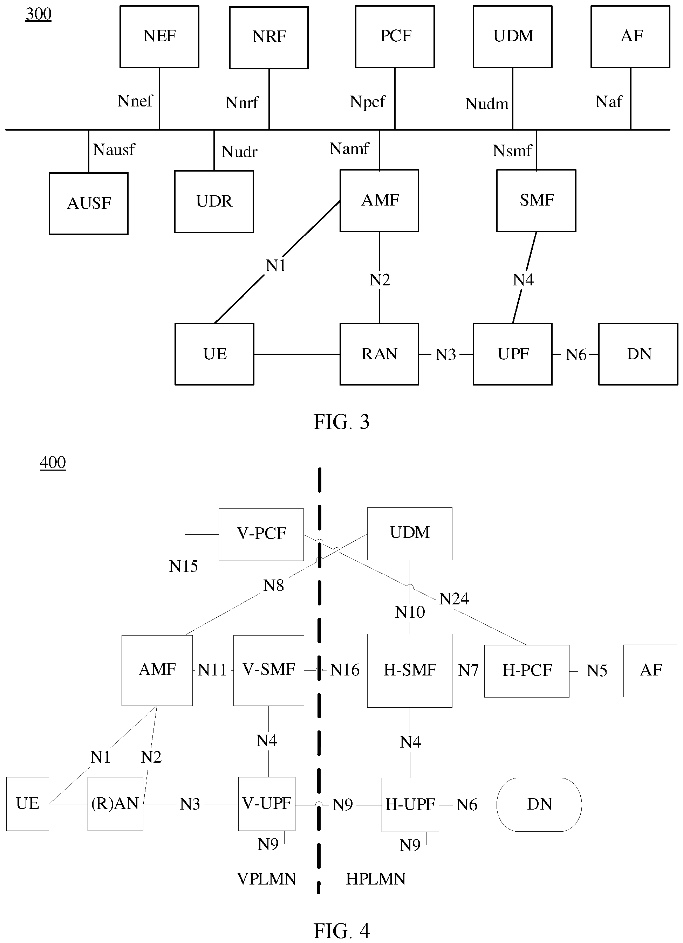

The system 100 shown in FIG. 1 may be applied to a 5th generation (5th generation, 5G) network architecture shown in FIG. 2 or FIG. 3, and certainly may alternatively be applied to a future network architecture, for example, a 6th generation (6th generation, 6G) network architecture. This is not specifically limited in embodiments of this application.

For example, it is assumed that when the communication system shown in FIG. 1 is applied to the 5G network shown in FIG. 2 or FIG. 3, the policy control function network element may be an access and mobility management policy control function network element (policy control function for access and mobility control, AM PCF) in 5G, and the mobility management network element may be an access and mobility management (access and mobility management function, AMF) network element in 5G.

The following describes 5G systems in different scenarios with reference to FIG. 2 and FIG. 3 by using examples. It should be understood that the 5G systems described in this specification are merely examples, and should not constitute any limitation on this application.

FIG. 2 is a schematic architectural diagram of a basic 5G system 200. As shown in FIG. 2, the system 200 includes a PCF, an AMF, a session management function (session management function, SMF), a radio access network (radio access network, RAN), unified data management (unified data management, UDM), a data network (data network, DN), a user plane function (user plane function, UPF), UE, an application function (application function, AF), and/or a unified data repository (unified data repository, UDR). Optionally, the following functions (not shown in FIG. 2) may further be included in FIG. 2: a network slice selection function (network slice selection function, NSSF), an authentication server function (authentication server function, AUSF), a capability exposure function (network exposure function, NEF), or a network repository function (NF repository function, NRF).

Main functions of the network elements are described as follows:

### 1. Terminal device

The terminal device in the embodiments of this application may be user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice/data connectivity for a user, for example, a handheld device having a wireless connection function or an on-board device. Currently, for example, some terminals are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in unmanned driving (self-driving or autopilot), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an vehicle-mounted device, a wearable device, a terminal device in a 5G network, or a terminal device in a future evolved public land mobile communication network (public land mobile network, PLMN), and the like, this is not limited in the embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smart phones, such as smart watches or smart glasses, and devices that focus on only one type of application function and need to work with other devices such as smart phones, such as various smart bands or smart jewelry for monitoring physical signs. In addition, in embodiments of this application, the terminal device may alternatively be a terminal device in the internet of things (internet of things, IoT) system.

### 2. Radio access network

The radio access network is an access network that implements a network access function based on a wireless communication technology. The radio access network can manage radio resources, provide a radio access service or an air interface access service for a terminal, and forward a control signal and user data between the terminal and a core network.

As an example instead of a limitation, the radio access network may be an evolved NodeB (evolved NodeB, eNB, or eNodeB) in an LTE system, or may be a radio controller in a cloud radio access network (cloud radio access network, CRAN) scenario, or the access device may be a relay station, an access point, a vehicle-mounted device, a wearable device, an access device in a 5G network, an access device in a future evolved PLMN network, or the like, and may be an access point (access point, AP) in a WLAN, and may be a gNB in an NR system. This is not limited in this embodiment of this application.

### 3. Access and mobility management function network element

The access and mobility management function network element is mainly configured to perform mobility management, access management, and the like, and may be configured to implement another function in a mobility management entity (mobility management entity, MME) function other than session management, for example, a function such as monitor or access authorization (or authentication), and is further configured to transfer a user policy between the UE and the PCF. In the embodiments of this application, the access and mobility management function network element may be configured to implement functions of an access and mobility management network element.

### 4. Session management function network element

The session management function network element is mainly configured to perform: session management, internet protocol (internet protocol, IP) address assignment and management of a terminal device, manageable user plane function (user plane function, UPF) network element selection, policy control and charging function interface termination, and downlink data notification, and the like. In the embodiments of this application, the session management function network element may be configured to implement functions of a session management network element.

### 5. User plane function network element

The user plane function network element may be configured to perform packet routing and forwarding, QoS parameter processing of user plane data, or the like. User data may be accessed to a data network (data network, DN) through this network element. In this embodiment of this application, the user plane function network element may be configured to implement a function of a user plane network element. For example, when sessions are established on different UPFs, service experience of the UE is also different. Therefore, the SMF needs to select an appropriate UPF for the sessions of the UE.

### 6. Policy control function network element

The policy control function network element is used to guide a unified policy framework of network behavior, provide policy rule information for a control plane function network element (such as an AMF network element or an SMF network element), and the like. The policy control function network element performs policy control functions, such as charging, QoS bandwidth guarantee, mobility management, and UE policy decision, for sessions and service flows. In this embodiment of this application, the PCFs connected to the AMF and the SMF are respectively corresponding to the AM PCF (PCF for Access and Mobility Control) and the SM PCF (PCF for Session Management). In an actual deployment scenario, the AM PCF and the SM PCF may be a same PCF entity, or may be two different PCF entities.

### 7. Network exposure function network element

The network exposure function network element is configured to expose, to the outside, service and network capability information (such as a location of a terminal and whether a session is reachable) provided by a 3GPP network function.

### 8. Application function network element

The application function network element is mainly configured to transfer a requirement of an application side on a network side, for example, a QoS requirement or user status event subscription. The AF may be a third-party functional entity or an application service deployed by an operator, for example, an IMS voice call service. When interacting with a core network, the application function entity of a third-party application may further perform authorization processing through the NEF. For example, the third-party application function directly sends a request message to the NEF, and the NEF determines whether the AF is allowed to send the request message. If the authentication succeeds, the NEF forwards the request message to a corresponding PCF or unified data management (unified data management, UDM).

### 9. Unified data management network element

The unified data management network element is mainly used for unified data management, and supports authentication trust status processing, subscriber identity processing, access authorization, registration and mobility management, subscription management, short message management, and the like in a 3GPP authentication and key agreement mechanism.

### 10. Unified data storage network element

The unified data storage network element is mainly configured to access data such as subscription data, policy data, and application data.

### 11. Data network

The data network refers to a specific data service network accessed by UE. For example, a typical DN includes the internet and an IP multimedia subsystem (IP multimedia subsystem, IPMS).

In the preceding architectures, the functions of each interface are described as follows:
N7 represents an interface between the PCF and SMF, and is configured to deliver a PDU session granularity and a service data flow granularity control policy.
N15 represents an interface between the PCF and the AMF, and is configured to deliver a UE policy and an access control related policy.
N5 represents an interface between the AF and the PCF, and is configured to deliver an application service request and report a network event.
N4 represents an interface between the SMF and the UPF, and is configured to transmit information between a control plane and a user plane, including delivery of forwarding rules, QoS control rules, traffic statistics rules, and the like from the control plane to the user plane, and reporting of user-plane information.
N11 represents an interface between the SMF and the AMF, and is configured to: transmit PDU session tunnel information between the RAN and the UPF, transmit a control message to be sent to the UE, transmit radio resource control information to be sent to the RAN, and the like.
N2 represents an interface between the AMF and the RAN, and is configured to: transmit radio bearer control information from a core network side to the RAN, and the like.
N1 represents an interface between the AMF and the UE, is access-irrelevant, and is configured to: transmit the QoS control rules to the UE, and the like.
N8 represents an interface between the AMF and the UDM, and is used by the AMF to obtain, from the UDM, subscription data related to access and mobility management and authentication data, and used by the AMF to register current mobility management related information of the UE with the UDM, and the like.
N10 represents an interface between the SMF and the UDM, and is used by the SMF to obtain, from the UDM, subscription data related to session management, and used by the SMF to register current session related information of the LTE with the UDM, and the like.
N35 represents an interface between the UDM and the UDR, and is used by the UDM to obtain user subscription data information from the UDR.
N36 represents an interface between the PCF and the UDR, and is used by the PCF to obtain policy-related subscription data and application data related information from the UDR.
N52 represents an interface between the UDM and the NEF, and is used by the NEF to expose a network capability to a third-party application function. For example, the third-party application function subscribes to a reachability event of all users in a specific group from the UDM through the NEF.

In addition, the NEF has direct interfaces with the AMF and the SMF, which correspond to the N29 and N51 interfaces (not shown in the preceding figures for brevity) respectively. The N29 and N51 interfaces are configured to open carrier network capabilities to third-party application function entities. The N29 interface may be used by the NEF to subscribe to corresponding network events and update user configuration information from the AMF. The N51 interface may be used to update application configuration data on the SMF/UPF, such as the packet flow description information (packet flow description, PFD) corresponding to an application ID.

It should be understood that the foregoing network architecture applied to embodiments of this application is merely an example of a network architecture described from the perspective of a conventional point-to-point architecture and a service architecture, and a network architecture applicable to embodiments of this application is not limited thereto. Any network architecture that can implement functions of the foregoing network elements is applicable to embodiments of this application.

It should be understood that names of the interfaces between the network elements in FIG. 2 are merely examples, and the interfaces may have other names in a specific implementation. This is not specifically limited in this application. In addition, names of messages (or signaling) transmitted between the foregoing network elements are merely examples, and do not constitute any limitation on functions of the messages.

It should be noted that the network element may also be referred to as an entity, a device, an apparatus, a module, or the like. This is not particularly limited in this application. In addition, in this application, for ease of understanding and description, a description of a network element is omitted in some descriptions. For example, an SMF network element is referred to as an SMF for short. In this case, the "SMF" should be understood as an SMF network element. The following omits descriptions of a same or similar case.

It may be understood that the network elements or the functions may be network elements in a hardware device, software functions running on dedicated hardware, or virtualized functions instantiated on a platform (for example, a cloud platform). Optionally, the foregoing network elements or functions may be implemented by one device, or may be jointly implemented by a plurality of devices, or may be one functional module in one device. This is not specifically limited in embodiments of this application.

It should be further understood that in the communication system shown in FIG. 2, functions of the composition network elements are merely examples. When the composition network elements are applied to the embodiments of this application, not all the functions are necessary.

In addition, names of the network elements (such as the PCF and the AMF) included in FIG. 2 are merely names, and the names do not constitute any limitation on the functions of the network elements. In a 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be further noted that communication between network elements having control plane functions in FIG. 2 is described by using a non-service-based interface as an example, but does not constitute a limitation on the protection scope of the embodiments of this application. A person skilled in the art may understand that the network elements having the control plane functions in FIG. 2 may alternatively communicate with each other through a service-based interface. For example, an external service-based interface provided to by the AMF may be Namf; an external service-based interface provided by the SMF may be Nsmf; an external service-based interface provided by the UDM may be Nudm; a service-based interface provided by the AF may be Naf; and an external service-based interface provided by the PCF may be Npcf.

The network elements in FIG. 2 are architectures based on reference points, and do not constitute any limitation on the embodiments of this application. FIG. 3 is a schematic diagram of an architecture based on a service-based interface. As shown in FIG. 3, the architecture includes an NSSF, AUSF, UDM, NEF, NRF, PCF, AF, AMF, SMF, UE, RAN, UPF and a DN. In FIG. 3, an external service-based interface provided by the NSSF may be Nnssf, an external service-based interface provided by the NEF may be Nnef, an external service-based interface provided by the NRF may be Nnrf, an external service-based interface provided by the AMF may be Namf, an external service-based interface provided by the SMF may be Nsmf, an external service-based interface provided by the UDM may be Nudm, and an external service-based interface provided by the AF may be Naf, an external service-based interface provided by the PCF may be Npcf, an external service-based interface provided by the AUSF may be Nausf, and an external service-based interface provided by the CHF may be Nchf, and the interface between the control plane function and the RAN and the UPF is a non-service-based interface. The UE is connected to the AMF through an N1 interface, and the UE is connected to the RAN through the Radio Resource Control (radio resource control, RRC) protocol. The RAN is connected to the AMF through an N2 interface, and the RAN is connected to the UPF through an N3 interface. The UPF is connected to the DN through an N6 interface, and the UPF is connected to the SMF through an N4 interface. For related descriptions, refer to a 5G system architecture (5G system architecture) in the standard. For brevity, a connection relationship of the architecture 300 is not described herein again.

The general subscriber registration procedure may be briefly described as follows: UE sends a registration request to an AMF through an AN. The AMF obtains subscription data from a specific UDM based on a subscriber identifier. After receiving a request, the UDM may obtain actual subscription data from a UDR. In addition, the AMF may send a user policy control and creation (UE PolicyControl_Create) request and an access and management policy control and creation (AM PolicyControl_ Create) request to the PCF to obtain the UE policy and access control policy, respectively. In this process, the PCF returns the access control policy to the AMF, and the AMF provides the UE policy for the UE.

The general session establishment procedure may be briefly described as follows: The UE sends a session establishment request to the AMF through the RAN. The AMF selects an SMF to serve a session, stores a correspondence between the SMF and a PDU session, and sends a session establishment request to the SMF. The SMF selects a corresponding UPF for the UE, establishes a user plane transmission path, and allocates an IP address to the UE. In this process, the SMF further initiates a policy control session establishment request to the PCF, to establish a policy control session between the SMF and the PCF. In a policy control session establishment process, the SMF stores a correspondence between the policy control session and the PDU session. In addition, the AF may establish an AF session with the PCF, and the PCF binds the AF session to the policy control session.

FIG. 4 is a schematic diagram of an example of a home-routed roaming (Home-routed Roaming) architecture to which this application is applicable.

As shown in FIG. 4, in this roaming architecture, an AMF and an SMF are respectively located in a visited location and a home location, and a session management function is performed by a home H-SMF that supports interaction with a UDM/home policy control function network element H-PCF. In addition, in an actual scenario, an H-PCF connected to a visited V-PCF and an H-PCF connected to an H-SMF may be a same PCF entity, or may be different PCF entities.

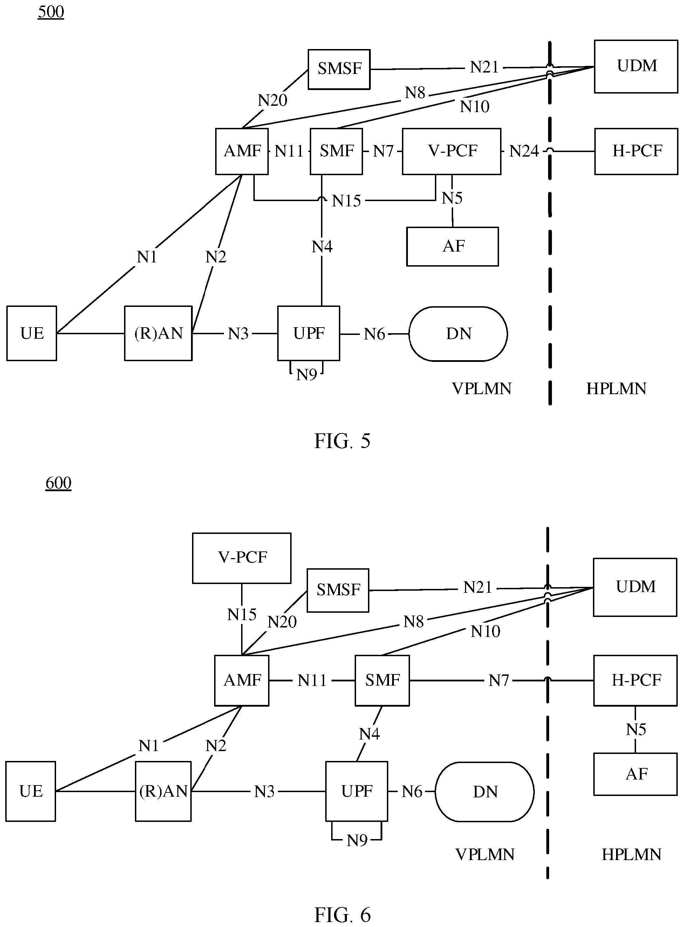

FIG. 5 is a schematic diagram of an example of a local breakout roaming (Local Breakout Roaming) architecture to which this application is applicable.

As shown in FIG. 5, in this roaming architecture, both an AMF and an SMF are located in a visited location. In this case, a session management function is performed by a visited SMF function entity. In addition, in an actual scenario, a visited policy control function network element V-PCF connected to the AMF and a V-PCF connected to the SMF may be a same PCF entity or different PCF entities.

Currently, an operator in China also adopts an inter-province roaming architecture shown in FIG. 6. In this roaming architecture, an AMF/SMF is located in a visited province, and a PCF in a home province delivers corresponding policy rules to the SMF in the visited province through an N7 interface. The AMF may obtain the corresponding access and mobility management policy through the V-PCF deployed in the visited province.

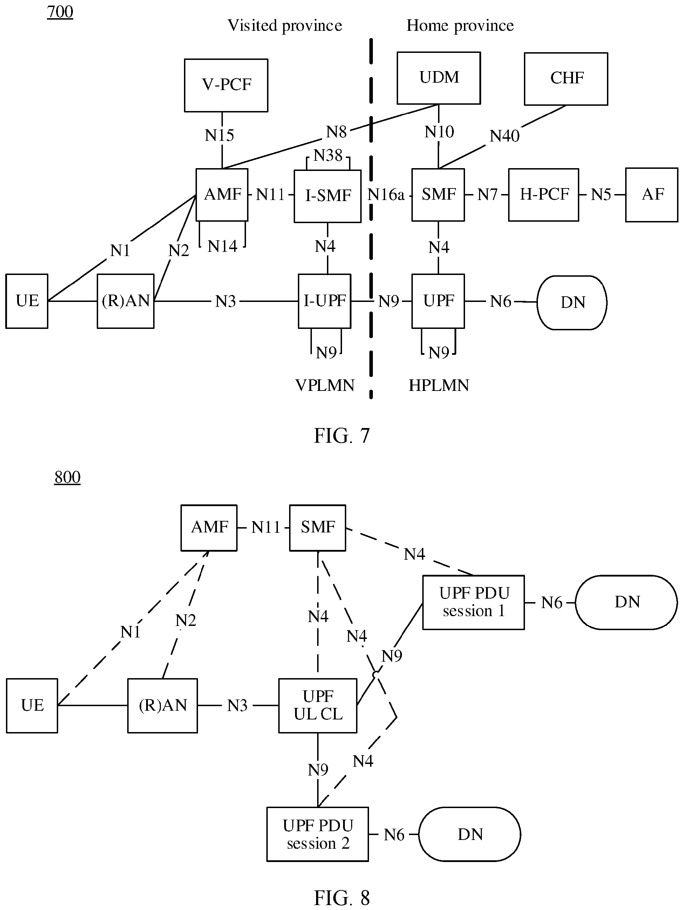

In an optional application scenario, an SMF/UPF shown in FIG. 6 may also be replaced with an intermediate session management function network element I-SMF/intermediate user plane network element I-UPF, an SMF/UPF network element is added in a home province, and an SMF/UPF deployed in a home province is responsible for performing a session management service for the session. For a corresponding architectural diagram, refer to FIG. 7. The 1-SMF is mainly responsible for controlling the I-UPF based on corresponding information sent by the SMF. To reduce a service access delay, an operator may deploy a UPF network element near an application access point, so that a user can access an application service nearby. That is, a UL CL mode shown in FIG. 8 is used to directly route an area-related service flow to an area network through a local UPF. The UE is unaware of this process, and a session management network element SMF determines the process based on a location of the UE, a currently initiated service type, matching information for services in the area, and the like.

However, the preceding service in the area is available to an intra-province subscriber or a subscriber in China, because subscription information of an inter-province or international roaming subscriber is in a home province or operator. Currently, there is no mechanism that supports a roaming subscriber to subscribe to a service in an area of a visited network. In international roaming and inter-province roaming scenarios, directly inserting a UL CL and a local UPF in a visited network according to a local policy is not supported.

It should be understood that, in the architectures shown in FIG. 4 to FIG. 8, network elements may also communicate with each other through service-based interfaces. For details, refer to descriptions in FIG. 2 or FIG. 3. For brevity, details are not described herein again.

Based on this, this application provides a service access method and apparatus. This helps a roaming subscriber (for example, a terminal device) to access a service in an area of a visited network without affecting a home network.

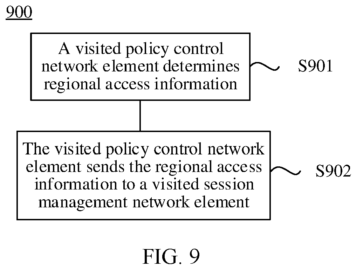

FIG. 9 is a schematic flowchart of an example of a service access method according to this application. The service access method 900 is applied to the network architectures shown in FIG. 2 to FIG. 8 with reference to the following steps.

S901. A visited policy control function network element determines regional access information, where the policy control function network element is a policy control function network element responsible for access and mobility management.

The regional access information includes an identifier (ASP Identifier/Application ID) of a service in an area.

Optionally, the visited policy control function network element may receive the regional access information from an AF, an NEF, or a UDR.

Optionally, the visited policy control function network element may locally obtain the pre-configured regional access information.

The regional access information may further include identification information (List of available DNAIs) of a regional access point, where the identification information of the regional access point identifies an available access point in the area.

Optionally, the regional access information may further include routing information (DNAI routing information) of the regional access point and service area information (Service Area of DNAI) of the regional access point. The routing information of the regional access point may indicate a routing address of the regional access point, for example, information such as a destination address and a port number corresponding to an AF server. The service area information of the regional access point may indicate an area range in which the regional access point is available.

S902. The visited policy control function network element sends the regional access information to a visited session management network element. Correspondingly, the visited session management network element receives the regional access information from the visited policy control function network element, and provides access to the service in the area for the terminal device based on the regional access information.

Optionally, before sending the regional access information to the visited session management network element, the visited policy control function network element may determine that the terminal device has subscribed to the service.

Optionally, before sending the regional access information to the visited session management network element, the visited policy control function network element may further obtain location information of the terminal device, and determine, based on the location information and the regional access information of the terminal device, that the terminal device is in a range of the area. In a possible implementation, the visited policy control function network element may send the regional access information through a direct interface between the visited policy control function network element and the visited session management network element.

In another possible implementation, the visited policy control function network element may send the regional access information to the visited session management network element through a mobility management network element. In this case, the visited policy control function network element further needs to send session feature information to the mobility management network element, so that the mobility management network element determines the visited session management network element. The session feature information includes a data network name (data network name, DNN) and/or network slice selection assistance information (single-network slice selection assistance information, S-NSSAI). Optionally, the session feature information may further include a DNN and/or S-NSSAI that match a user equipment route selection policy (UE routing selection policy, URSP).

For example, according to the communication system provided in this application, the visited policy control function network element responsible for access and mobility management may send the regional access information of the terminal device to the visited session management network element, and the session management network element may provide access to the service in the area for the terminal device based on the regional access information. This helps a roaming subscriber (for example, a terminal device) to access the service in the area of the visited network without affecting a home network.

For ease of understanding of the service access method provided in this application, the following uses the inter-province roaming architecture in FIG. 4 as an example to describe the embodiments of this application.

It should be understood that the following embodiments are not only applicable to the home-routed international roaming scenario shown in FIG. 4, but also applicable to another roaming scenario above. This is not limited in this application.

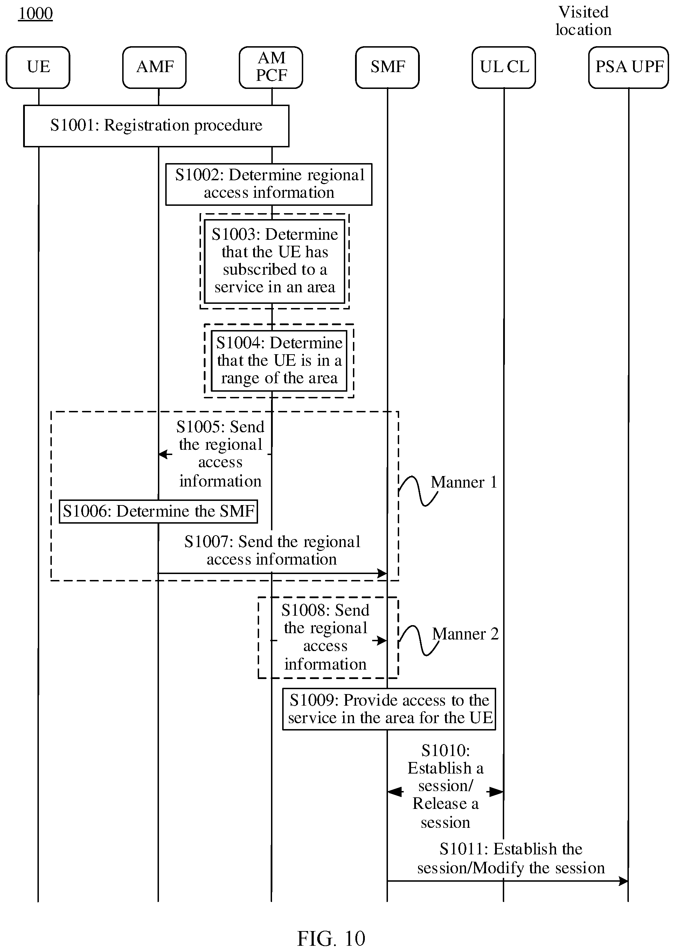

FIG. 10 is a schematic flowchart of another example of a service access method according to this application.

S1001: UE initiates a registration procedure with a 5G core network through an AMF, where the UE is located in a visited location. For this process, refer to the conventional technology. Details are not described herein.

S1002: A visited AM PCF determines regional access information of the UE, where the regional access information includes an identifier of a service in the area.

In this embodiment of this application, the visited AM PCF may receive the regional access information from an AF, an NEF, or a UDR, or may locally obtain pre-configured regional access information. For content included in the regional access information, refer to the descriptions in FIG. 9. For brevity, details are not described herein again.

S1003: The visited AM PCF determines that the UE has subscribed to the service in the area.

There may be a plurality of manners in which the visited AM PCF determines that the UE has subscribed to the service in the area. This is not limited in this application. For example, the visited AM PCF may determine, based on subscription information of the UE, that the UE has subscribed to the service. For another example, the visited AM PCF may receive request information from the AF, where the request information may request to subscribe to the service in the area for the UE, so that the AM PCF may determine, based on the request information, that the UE has subscribed to the service. For another example, the visited AM PCF may further determine, based on an access policy pre-configured for the area, that the UE has subscribed to the service in the area.

S1004: The visited AM PCF determines that the UE is in a range of the area.

Specifically, the visited AM PCF may obtain location information of the UE from the AMF, and determine, based on the location information and the regional access information of the UE, that the UE is in the range of the area.

After the foregoing steps S 1003 and S 1004 are performed, the visited AM PCF determines that the UE can access the service in the area, so that the visited AM PCF may send the regional access information to a visited SMF.

It should be understood that, an objective of steps S1003 and S1004 is to determine that the UE can access the service in the area. In actual application or with development of technologies, a manner of determining that the UE can access the service in the area should not be limited to the implementation shown in steps S1003 and S1004 and should fall within the protection scope of this embodiment of this application.

The visited AM PCF sends the regional access information to the visited SMF in two manners.

### Manner 1:

The visited AM PCF may send the regional access information to the visited SMF through the AMF. Correspondingly, the visited SMF receives the regional access information from the visited AM PCF through the AMF.

S1005: The visited AM PCF sends the regional access information to the AMF. In this case, the visited AM PCF further needs to send session feature information to the AMF, to determine the visited SMF. Correspondingly, the AMF receives the regional access information and the session feature information from the visited AM PCF. For specific content included in the regional access information and the session feature information, refer to the descriptions in FIG. 9. For brevity, details are not described herein again.

In an optional implementation, the visited AM PCF may carry the regional access information and the session feature information in a create response (Create Response) message sent to the AMF. Alternatively, the visited AM PCF may carry the regional access information and the session feature information in an update notification message (Update Notify Request) sent to the AMF. S1006: The AMF determines the visited SMF based on the session feature information, and performs a subsequent operation after receiving a corresponding PDU session establishment request.

S1007: The AMF sends the regional access information to the visited SMF. Correspondingly, the visited SMF receives the regional access information from the AMF.

If a target session has not been established, the AMF may send, after receiving a corresponding session establishment request, the regional access information to the visited SMF by using a context creation request (Create SM Context) message. If the target session has been established, the AMF may carry the regional access information in the update notification message (Update Notify Request).

### Manner 2:

S1008: The visited AM PCF may send the regional access information to a target SMF through a direct interface between the visited AM PCF and the visited SMF. Correspondingly, the visited SMF receives the regional access information through the direct interface between the visited SMF and the visited AM PCF. In this way, the visited AM PCF directly exchanges information with the visited SMF, so that impact on an AMF in the visited network can be avoided.

After receiving the regional access information of the UE, the visited SMF may provide access to the service in the area for the UE based on the regional access information.

S1009: The visited SMF determines to provide access to the service in the area for the UE based on the regional access information. Specifically, the SMF may insert or delete an uplink classifier UL CL/local user plane function UPF network element for a UE session, or reselect a UL CL/local UPF. For example, the visited SMF may determine, based on a location of the terminal, that the terminal is in a range of the area, and may insert the UL CL/Local UPF. For another example, there may be a plurality of access points for the service in the area, when the UE moves between coverage areas of the plurality of access points, a UL CL/Local UPF needs to be reselected.

The following uses UL CL/Local UPF insertion as an example to describe this process in detail. S1010: The visited SMF sends session establishment/session modification information to the UL CL. Correspondingly, the UL CL receives the session establishment/session modification information from the SMF.

S1011: The visited SMF sends the session establishment/session modification information to a PSA UPF. Correspondingly, the PSA UPF receives the session establishment/session modification information from the SMF.

Specifically, the visited SMF may select a UL CL UPF and/or a local UPF for the UE based on the location information of the UE, and configure a corresponding offloading rule on the UL CL. For example, a traffic flow in an area is forwarded to the local UPF through the UL CL, and a traffic flow not in the area is still exported through an original PSA UPF.

The UL CL and the local UPF may be separately deployed, or may be jointly deployed. This is not limited in this application.

In addition, the visited SMF may further configure downlink routing information on the local UPF and the PSA UPF, so that the visited SMF accurately forwards the downlink traffic flow to the UL CL network element.

It should be understood that, before inserting the UL CL/Local UPF, the visited SMF may further indicate, by using a service identifier in the regional access information, the UPF to detect whether the UE initiates a service in the area, and perform the foregoing action after determining that the UE has initiated the service.

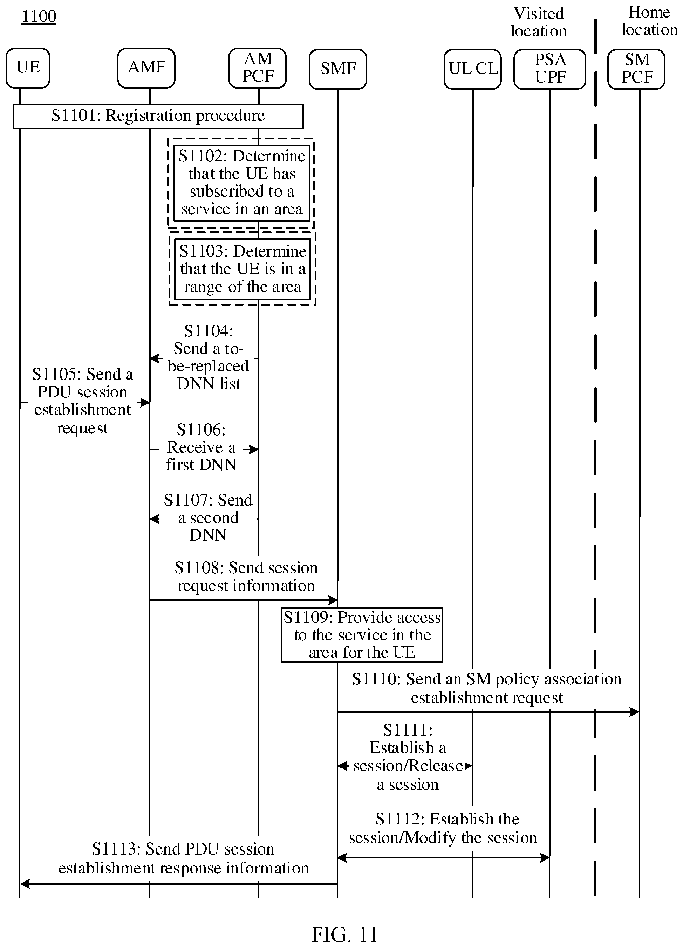

According to the technical solution of this application, the visited policy control function network element responsible for access and mobility management may send the regional access information of the terminal device to the visited session management network element, and the session management network element may provide access to the service in the area for the terminal device based on the regional access information. This helps a roaming subscriber (for example, a terminal device) to access the service in the area of the visited network without affecting a home network. FIG. 11 is a schematic flowchart of another example of a service access method according to this application.

S1101: UE initiates a registration procedure with a 5G core network through an AMF, where the UE is located in a visited location. For this process, refer to the conventional technology. Details are not described herein.

S1102: A visited AM PCF determines that the UE has subscribed to a service in the area.

S1103: The visited AM PCF determines that the UE is in a range of the area.

It should be noted that operations performed in steps S1102 and S1103 are consistent with those in steps S1003 and S1004 in FIG. 10. For brevity, details are not described herein again.

After the foregoing steps S1102 and S1103 are performed, the visited AM PCF determines that the UE can access the service in the area, so that the visited AM PCF may send the regional access information to a visited SMF.

It should be understood that an objective of steps S1102 and S1103 is to determine that the UE can access the service in the area. In actual application or with development of technologies, a manner of determining that the LTE can access the service in the area should not be limited to the implementation shown in steps S1102 and S1103 and should fall within the protection scope of this embodiment of this application.

S1104: The visited AM PCF sends a to-be-replaced DNN list and replacement indication information to the AMF. Correspondingly, the AMF receives the to-be-replaced DNN list and the replacement indication information from the visited AM PCF.

The to-be-replaced DNN list includes a first DNN. The first DNN indicates a DNN requested by the UE, the replacement indication information indicates to replace the first DNN with a second DNN, and the second DNN indicates a DNN selected by the policy control function network element for the UE.

S1105: The UE sends a PDU session establishment request to the AMF. Correspondingly, the AMF receives the PDU session establishment request from the UE. The request includes the first DNN, namely, the DNN requested by the UE.

The AMF determines that the to-be-replaced DNN list includes the first DNN sent by the UE, and may replace the first DNN with the second DNN based on the replacement indication information, that is, replace the DNN requested by the UE with the DNN selected by the visited AM PCF for the UE.

S1106: The AMF sends the first DNN to the visited AM PCF. Correspondingly, the visited AM PCF receives the first DNN from the AMF.

S1107: The visited AM PCF determines the second DNN based on the first DNN, and sends the second DNN to the AMF, and the AMF receives the second DNN from the visited AM PCF. S1108: The AMF sends session request information to the visited SMF. Correspondingly, the visited SMF receives the session request information from the AMF. The session request information includes the first DNN and the second DNN.

S1109: The visited SMF accesses the service in the area for the UE based on the second DNN. S1110: The visited SMF sends an SM policy association establishment request to a home SM PCF, where the request information includes the first DNN, and requests, from the home SM PCF, a policy rule related to session management corresponding to the first DNN.

The SMF may further insert a UL CL/Local UPF network element for a UE session. For example, the SMF may determine, based on a location of the terminal, that the terminal is in a range of the area, and may insert a UL CL/Local UPF.

S1111: The visited SMF sends session establishment/session modification information to the UL CL. Correspondingly, the UL CL receives the session establishment/session modification information from the SMF.

S1112: The visited SMF sends the session establishment/session modification information to a PSA UPF. Correspondingly, the PSA UPF receives the session establishment/session modification information from the SMF.

It should be noted that steps S1111 and S1112 are consistent with steps S1010 and S1011 in FIG. 10. For brevity, details are not described again.

S1113: The visited SMF may send PDU establishment response information to the UE. Correspondingly, the UE receives the PDU establishment response information from the AMF, where the information is used to notify the UE that a target session has been established, that is, the UE has accessed the service in the area.

According to the technical solution of this application, the visited policy control function network element responsible for access and mobility management may replace a data network name requested by the terminal device with a data network name configured in a visited location, and send the configured data network name to the visited session management network element through the access and mobility management network element. This helps a roaming subscriber (for example, a terminal device) to access the service in the area of the visited network without affecting a home network.

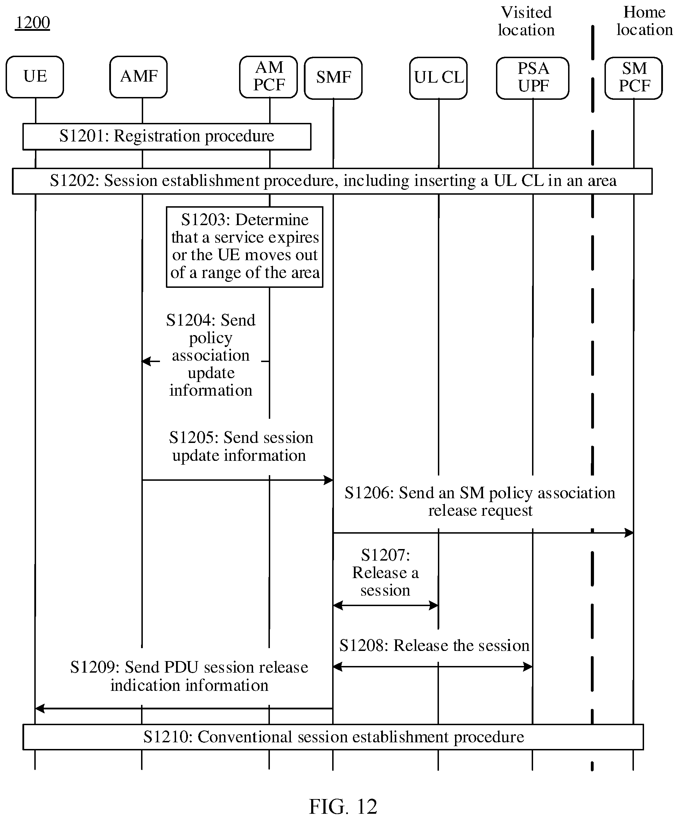

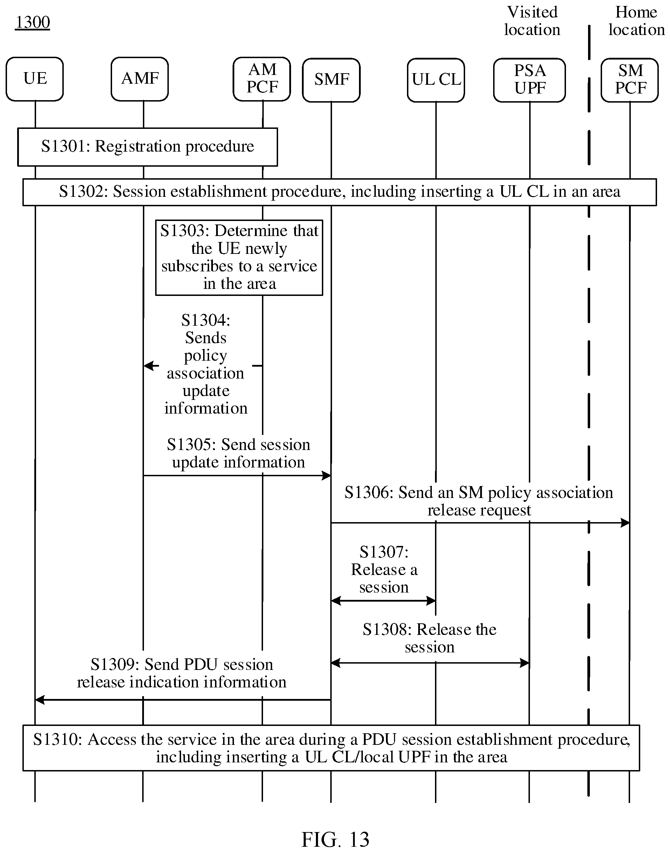

FIG. 10 and FIG. 11 mainly describe a case in which UE has subscribed to a service in an area before a session is established. The following describes, with reference to FIG. 12 and FIG. 13, a case in which a service in an area is invalid or a service subscription in a new area is added after the UE establishes the session.

FIG. 12 is a schematic flowchart of still another example of a service access method according to this application.

In this embodiment, LTE has accessed a service in an area by using the method in FIG. 9 or FIG. 10, that is, has completed steps S1201 and S1202. For a specific process, refer to descriptions in FIG. 9 or FIG. 10. Details are not described herein again.

S1203: A visited AM PCF determines that a service of the UE expires or moves out of a range of the area.

There may be a plurality of manners in which the visited AM PCF determines that the service of the UE in the area expires. This is not limited in this application. For example, it may be determined that the service of the UE is invalid with reference to the manner of determining the service in the area that the UE has subscribed to in steps S1003 and S1004 in FIG. 10. For brevity, details are not described herein again.

It should be understood that an objective of step S1203 is to determine that the service of the UE in the area is unavailable. In actual application or with development of a technology, a manner of determining that the service of the UE in the area is unavailable should not be limited to the implementation shown in step S1203 and should also fall within the protection scope of this embodiment of this application.

S1204: The visited AM PCF sends policy association update information to the AMF. Correspondingly, the AMF receives the policy association update information from the visited AM PCF, where the information indicates the AMF to re-establish a session. The policy association update information includes indication information, and the indication information indicates to delete the to-be-replaced DNN list.

Specifically, the visited AM PCF may carry the policy association update information in an update notification message (Update Notify Request) sent to the AMF.

S1205: The AMF sends session update information to the visited SMF. Correspondingly, the visited SMF receives the session update information from the AMF.

The information includes session release information and a release cause value (REL_DUE_TO_REACTIVATION), and indicates to delete a current session/the service in the area, and trigger the SMF to indicate the UE to perform a PDU session re-establishment procedure. S1206: The visited SMF sends an SM policy association release request to a home SM PCF.

S1207: The visited SMF sends session establishment/session modification information to a UL CL. Correspondingly, the UL CL receives the session establishment/session modification information from the visited SMF.

S1208: The visited SMF sends the session establishment/session modification information to a PSA UPF. Correspondingly, the PSA UPF receives the session establishment/session modification information from the visited SMF.

It should be noted that steps S 1207 and S 1208 are consistent with steps S1010 and S1011 in FIG. 10. For brevity, details are not described again.

S1209: The visited SMF sends PDU session release indication information to the UE. Correspondingly, the UE receives the PDU session release indication information from the visited SMF, where the indication information indicates to release a current session or the service in the area, and the information may further indicate the UE to re-initiate PDU session establishment. S1210: Trigger a conventional PDU session establishment process. For this process, refer to the conventional technology. To be specific, the AMF does not replace a DNN, and the visited SMF does not insert a UL CL/Local UPF either.

According to the technical solution of this application, after the terminal device accesses the service in a visited location, the visited policy control function network element responsible for access and mobility management may indicate the access and mobility management network element to send the session update information to the visited session management network element when determining that the service in the area of the terminal device expires, to help establish a session in time for a roaming subscriber (for example, the terminal device) according to a regular procedure after the service in the area of the visited network expires, thereby improving user experience.

FIG. 13 is a schematic flowchart of still another example of a service access method according to this application.

In this embodiment, LTE has accessed a service in an area by using the method in FIG. 9 or FIG. 10, that is, has completed steps S1301 and S1302. For a specific process, refer to descriptions in FIG. 9 or FIG. 10. Details are not described herein again.

S1303: A visited AM PCF determines that the UE newly subscribes to a service in the area.

The visited AM PCF may determine that the UE newly subscribes to the service in the area may be in a plurality of manners. This is not limited in this application. For example, the visited AM PCF may determine, based on subscription information of the UE, that the UE newly subscribes to the service. For another example, the visited AM PCF may receive request information from the AF, where the request information may request to newly subscribe to the service in the area for the UE, so that the AM PCF may determine, based on the request information, that the UE newly subscribes to the service. For another example, the visited AM PCF may further determine, based on an access policy pre-configured for the area, that the UE newly subscribes to the service. Optionally, the visited AM PCF may further determine that the UE is in a range of the area. Specifically, the visited AM PCF may obtain location information and regional access information of the UE from the AMF, and determine, based on the location information and the regional access information of the UE, that the UE is in the range of the area.

It should be understood that, an objective of step S1303 is to determine that the UE newly subscribes to the service in the area. In actual application or with development of technologies, a manner of determining that the UE newly subscribes to the service in the area should not be limited to the implementation shown in step S1303 and should also fall within the protection scope of this embodiment of this application.

After step S1303 is performed, the visited AM PCF determines that the UE newly subscribes to the service in the area, to perform a subsequent operation.

S1304: The visited AM PCF sends policy association update information to the AMF. Correspondingly, the AMF receives the policy association update information from the AM PCF. The information indicates the AMF to re-establish a session. The policy association update information includes a to-be-replaced DNN list and replacement indication information.

The to-be-replaced DNN list includes a first DNN. The first DNN indicates a DNN requested by the UE, the replacement indication information indicates to replace the first DNN with a second DNN, and the second DNN indicates a DNN selected by the policy control function network element for the UE.

Specifically, the visited AM PCF may carry the policy association update information in an update notification message (Update Notify Request) sent to the AMF.

S1305: The AMF sends session update information to the visited SMF, and the visited SMF receives the session update information. This step is the same as S1205 in FIG. 12. For brevity, details are not described again.

S1306: The visited SMF sends an SM policy association release request to a home SM PCF. S1307: The visited SMF sends session establishment/session modification information to a UL CL. Correspondingly, the UL CL receives the session establishment/session modification information from the SMF.

S1308: The visited SMF sends the session establishment/session modification information to a PSA UPF. Correspondingly, the PSA UPF receives the session establishment/session modification information from the SMF.

It should be noted that steps S 1 307 and S1 308 are consistent with steps S1010 and S1011 in FIG. 10. For brevity, details are not described again.

S1309: The visited SMF sends PDU session release indication information to the UE. Correspondingly, the UE receives the PDU session release indication information from the visited SMF, where the indication information indicates to release a current session or the service in the area, and the information may further indicate the UE to re-initiate PDU session establishment. S1310: Trigger to access the service in the area in a PDU session establishment process. For this process, refer to the description in FIG. 11. To be specific, the AMF replaces a DNN, and the visited SMF inserts a UL CL/Local UPF.

According to the technical solution of this application, after the terminal device accesses the service in the visited location, the visited policy control function network element responsible for access and mobility management may indicate the access and mobility management network element to send session update information to the visited session management network element when determining that the terminal device newly subscribes to the service in the area. This helps a roaming subscriber (for example, a terminal device) to access in time the newly subscribed service in the area of the visited network after the service is newly subscribed.

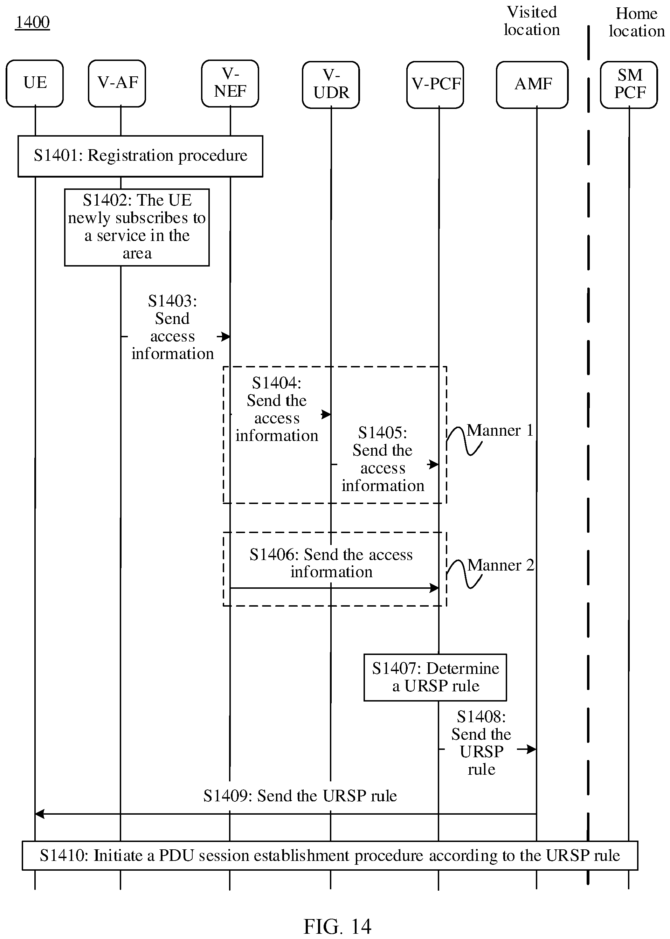

FIG. 14 is a schematic flowchart of still another example of a service access method according to this application.

S1401: UE accesses a 5G core network by using a visited network through a regular registration procedure, where the UE is located in a visited location. For this process, refer to the conventional technology. Details are not described herein.

S1402: The UE newly subscribes to a service in the area through a V-AF (Visited-AF).

S1403: The V-AF sends regional access information of the UE to a V-NEF (Visited-NEF).

Specifically, the V-AF may send the regional access information to the NEF according to pre-configured NEF address information, where the regional access information includes service identifier, subscriber (UE) identifier, and routing information. The subscriber identifier includes a generic public subscription identity (generic public subscription identity, GPSI) and a subscription permanent identifier (subscription permanent identifier, SUPI).

After receiving the access information, the V-NEF determines, based on the subscriber identifier, such as MCC and NCC, that the subscriber is a roaming subscriber, and may store subscription information in the local network. Specifically, there may be the following two manners:

### Manner 1:

The V-NEF queries a V-UDR (Visited-UDR) based on a PLMN ID.

S1404: The V-NEF sends the regional access information to the V-UDR. Correspondingly, the V-UDR receives the regional access information from the V-NEF.

S1405: The V-UDR sends the regional access information to a V-PCF (Visited-PCF). Correspondingly, the V-PCF receives the regional access information from the V-UDR.

### Manner 2:

The V-NEF queries the V-PCF based on the GPSI and/or the SUPI.

S1406: The V-NEF sends the regional access information to the V-PCF, and the V-PCF receives the regional access information from the V-NEF.

S1407: The V-PCF determines a user equipment route selection policy URSP rule for a UE based on the regional access information, where the URSP rule includes indication information, and the indication information indicates that URSP information is used only by the UE to access a service in a visited area.

The URSP rule may further include a DNN and/or S-NSSAI corresponding to the service in the visited area that the UE accesses.

S1408 and S1409. The V-PCF may send the URSP rule to the UE through an AMF, and the UE receives the URSP rule from the V-PCF through the AMF.

Optionally, the V-PCF may directly send the URSP rule to the UE. In other words, the UE directly receives the URSP rule from the V-PCF, to avoid impact on a visited AMF and reduce signaling overheads.

S1410: The UE initiates a PDU session establishment procedure according to the URSP rule. Specifically, the UE may determine, based on that a to-be-initiated service in the area matches the URSP rule, that a current access network is a visited network, and access the service in the area according to the URSP rule.

According to the technical solution of this application, the visited policy control function network element may send the URSP rule dedicated to the visited location to the terminal device. This helps a roaming subscriber (for example, a terminal device) to access the service in the area of the visited network without affecting a home network In addition, the policy control function network element does not need to directly or indirectly indicate the session management network element to provide access to the service in the area for the terminal device, thereby reducing signaling overheads and reducing method complexity.

It should be understood that specific examples in embodiments of this application are merely intended to help a person skilled in the art better understand embodiments of this application, but are not intended to limit the scope of embodiments of this application. For example, the procedures in the embodiments are described by using an inter-province roaming scenario, but are also applicable to a home-routed international roaming scenario and an inter-province HR roaming scenario. Correspondingly, the SMF in the procedure may be a V-SMF in the HR international roaming scenario, or may be an I-SMF (intermediate-SMF) in an inter-province HR roaming scenario. A specific interaction procedure of the SMF is basically the same as that in the procedure in this embodiment, except that an interaction action between the I-SMF/V-SMF and the SMF/H-SMF (home-SMF) is added.

It should be further understood that a value of a sequence number of each of the foregoing processes does not mean an order of an execution sequence. The execution sequence of each process should be determined based on a function and internal logic of each process, and should not be construed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, the method implemented by the communication device may also be implemented by a component (for example, a chip or a circuit) that can be configured inside the communication device.

It should be noted that the foregoing describes the methods by using an example in which the "session" in this application is a PDU session and the "terminal device" in this application is UE. In actual application, the PDU session may be replaced with another session, and the UE may be replaced with another terminal device. This is not limited in this application.

The service access methods provided in the embodiments of this application are described above in detail with reference to FIG. 9 to FIG. 14. The foregoing service access methods are mainly described from a perspective of interaction between network elements. It may be understood that, to implement the foregoing functions, each network element includes a corresponding hardware structure and/or software module for executing the functions. A person skilled in the art should be able to be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

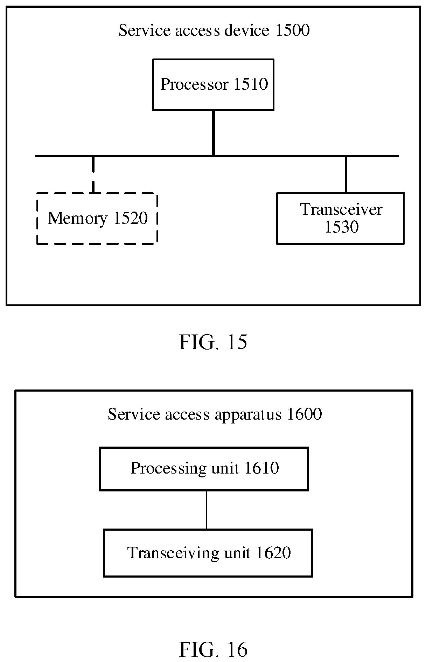

The following describes a service access apparatus provided in the embodiments of this application in detail with reference to FIG. 15 and FIG. 16. It should be understood that descriptions of apparatus embodiments correspond to the descriptions of the method embodiments. Therefore, for content that is not described in detail, refer to the foregoing method embodiments. For brevity, some content is not described again.

In embodiments of this application, function module division may be performed on the sending end device or the receiving end device based on the foregoing method example. For example, each function module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 15 is a schematic block diagram of an example of a service access device 1500 according to this application. Any network element involved in any one of the foregoing methods 900 to 1400, such as a session management network element and a policy control function network element, may be implemented by the access service device shown in FIG. 15.

It should be understood that the service access device 1500 may be a physical device, or may be a component (for example, an integrated circuit or a chip) of a physical device, or may be a function module in a physical device.

As shown in FIG. 15, the service access device 1500 includes one or more processors 1510. The processor 1510 may store an executable instruction used to perform the methods in the embodiments of this application. Optionally, the processor 1510 may invoke an interface to implement receiving and sending functions. The interface may be a logical interface or a physical interface. This is not limited. For example, the interface may be a transceiver circuit or an interface circuit. The transceiver circuit or the interface circuit configured to implement the receiving and sending functions may be separated or may be integrated together. The transceiver circuit or the interface circuit may be configured to read and write code/data, or the transceiver circuit or the interface circuit may be configured to transmit or transfer a signal.

Optionally, the interface may be implemented through a transceiver. Optionally, the service access device 1500 may further include a transceiver 1530. The transceiver 1530 may be referred to as a transceiver unit, a transceiver machine, a transceiver circuit, a transceiver, or the like, and is configured to implement a transceiver function.

Optionally, the service access device 1500 may further include a memory 1520. A specific deployment location of the memory 1520 is not specifically limited in this embodiment of this application. The memory may be integrated into the processor, or may be independent of the processor. In a case in which the service access device 1500 does not include a memory, the service access device 1500 has a processing function, and the memory may be deployed at another location (for example, in a cloud system).

The processor 1510, the memory 1520, and the transceiver 1530 communicate with each other through an internal connection path, to transmit a control signal and/or a data signal.

It may be understood that, although not shown, the service access device 1500 may further include another apparatus, such as an input apparatus, an output apparatus, or a battery.

Optionally, in some embodiments, the memory 1520 may store an executable instruction used to perform the methods in the embodiments of this application. The processor 1510 may execute the instruction stored in the memory 1520 and complete, in combination with another hardware (for example, the transceiver 1530), steps to be performed in the following methods. For a specific working process and beneficial effects, refer to the descriptions in the foregoing method embodiments.

The methods disclosed in the embodiments of this application may be applied to the processor 1510, or may be implemented by the processor 1510. The processor 1510 may be an integrated circuit chip, and has a signal processing capability. In an implementation process, the steps of the method may be performed through a hardware integrated logic circuit in the processor or by using instructions in a form of software. The foregoing processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

It may be understood that the memory 1520 may be a volatile memory or a nonvolatile memory, or may include both a volatile memory and a nonvolatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

FIG. 16 is a schematic block diagram of a service access apparatus 1600 according to this application.

Optionally, a specific form of the service access apparatus 1600 may be a general-purpose computer device or a chip in the general-purpose computer device. This is not limited in this embodiment of this application. As shown in FIG. 16, the service access apparatus includes a processing unit 1610 and a transceiver unit 1620.

Specifically, the service access apparatus 1600 may be any network element in this application, and may implement a function that can be implemented by the network element. It should be understood that the service access apparatus 1600 may be a physical device, or may be a component (for example, an integrated circuit or a chip) of a physical device, or may be a function module in a physical device.

In a possible design, the service access apparatus 1600 may be the policy control apparatus in the foregoing method embodiments, or may be a chip configured to implement a function of the policy control apparatus in the foregoing method embodiments.

For example, the processing unit 1610 is configured to determine regional access information of a terminal device, where the regional access information includes an identifier of a service; and the transceiver unit 1620 is configured to send the regional access information to a session management network element, where the regional access information is used by the session management network element to provide access to a service in an area for the terminal device. The transceiver unit 1620 is specifically configured to receive the regional access information from a network exposure function network element or a unified database network element; or the transceiver unit 1620 is specifically configured to obtain pre-configured regional access information.

Optionally, the processing unit 1610 is further configured to determine that the terminal device has subscribed to a service.

Optionally, the transceiver unit 1620 is further configured to: obtain location information of the terminal device, and determine, based on the location information of the terminal device and the regional access information, that the terminal device is in a range of the area.

It should be further understood that, when the service access apparatus 1600 is a policy control device, the transceiver unit 1620 in the service access apparatus 1600 may be implemented by using a communication interface (for example, a transceiver or an input/output interface), and the processing unit 1610 in the service access apparatus 1600 may be implemented by using at least one processor, for example, may correspond to the processor 1510 shown in FIG. 15.

Optionally, the service access apparatus 1600 may further include a storage unit. The storage unit may be configured to store instructions or data, and the processing unit may invoke the instructions or the data stored in the storage unit to implement a corresponding operation.

It should be understood that a specific process in which the units perform the foregoing corresponding steps is described in detail in the foregoing method embodiments, and for brevity, details are not described herein.

In another possible design, the service access apparatus 1600 may be the UE in the foregoing method embodiments, or may be a chip configured to implement a function of the UE in the foregoing method embodiments.

For example, the transceiver unit 1620 is configured to receive a user equipment route selection policy URSP rule from a visited policy control function network element, where the URSP rule includes indication information, and the indication information indicates that the URSP rule is used by the terminal device to access a service in an area; and the processing unit 1610 is configured to determine, based on that a to-be-initiated service in the area matches the URSP rule, that a current access network is a visited network, and access the service in the area according to the URSP rule.

It should be further understood that, when the service access apparatus 1600 is UE, the transceiver unit 1620 in the service access apparatus 1600 may be implemented by using a communication interface (for example, a transceiver or an input/output interface), for example, may correspond to the communication interface 1330 shown in FIG. 13. The processing unit 1610 in the service access apparatus 1600 may be implemented by using at least one processor, for example, may correspond to the processor 1510 shown in FIG. 15.

Optionally, the service access apparatus 1600 may further include a storage unit. The storage unit may be configured to store instructions or data, and the processing unit may invoke the instructions or the data stored in the storage unit to implement a corresponding operation.

It should be understood that a specific process in which the units perform the foregoing corresponding steps is described in detail in the foregoing method embodiments, and for brevity, details are not described herein.

It should be further understood that the apparatus 1600 may be further configured to implement functions of network elements such as the SMF and the AMF in the foregoing method embodiments. The transceiver unit 1620 may be configured to implement operations related to receiving and sending. The processing unit 1610 may be configured to implement other operations other than receiving and sending. For details, refer to the descriptions in the foregoing method embodiments. Details are not listed one by one herein.

In addition, in this application, the service access apparatus 1600 is presented in a form of a function module. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 1600 may be in a form shown in FIG. 16. The processing unit 1610 may be implemented by the processor 1510 shown in FIG. 15. Optionally, if the computer device shown in FIG. 15 includes the memory 1520, the processing unit 1610 may be implemented by using the processor 1510 and the memory 1520. The transceiver unit 1620 may be implemented by the transceiver 1530 shown in FIG. 15. The transceiver 1530 includes a receiving function and a sending function. Specifically, the processor is implemented by executing a computer program stored in a memory. Optionally, when the apparatus 1600 is a chip, a function and/or an implementation process of the transceiver unit 1620 may alternatively be implemented by using a pin, a circuit, or the like. Optionally, the memory may be a storage unit in the chip, for example, a register or a cache. The storage unit may alternatively be a storage unit that is in the computer device and that is located outside the chip, for example, the memory 1520 shown in FIG. 15, or may be a storage unit that is deployed in another system or device but not located in the computer device. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

Aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data. According to the methods provided in the embodiments of this application, this application further provides a computer program product. The computer program product includes computer program code. When the computer program code is run on a computer, the computer is enabled to perform the method in any one of the embodiments shown in FIG. 9 and FIG. 14.

According to the methods provided in the embodiments of this application, this application further provides a computer-readable medium. The computer-readable medium stores program code. When the program code is run on a computer, the computer is enabled to perform the method in any one of the embodiments shown in FIG. 7 and FIG. 11.

According to the methods provided in embodiments of this application, this application further provides a system. The system includes the foregoing apparatus or device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disc (solid state disc, SSD)), or the like.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that numbers "first", "second", and the like are introduced in the embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of the embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solution of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service access method, comprising:
determining, by a visited policy control function network element, regional access information of a terminal device, wherein the regional access information comprises an identifier of a service in an area, and the policy control function network element is a policy control function network element responsible for access and mobility management; and
sending, by the policy control function network element, the regional access information to a visited session management network element, wherein the regional access information is used by the session management network element to provide access to the service in the area for the terminal device.

2. The method according to claim 1, wherein the determining, by a policy control function network element, regional access information of a terminal device comprises:
receiving, by the policy control function network element, the regional access information from an application function network element, a network exposure function network element, or a unified database network element; or
obtaining, by the policy control function network element, pre-configured regional access information.

3. The method according to claim 1 or 2, wherein the method further comprises:
determining, by the policy control function network element, that the terminal device has subscribed to the service.

4. The method according to claim 3, wherein the method further comprises:
obtaining, by the policy control function network element, location information of the terminal device; and
determining, by the policy control function network element based on the location information and the regional access information of the terminal device, that the terminal device is in a range of the area.

5. The method according to any one of claims 1 to 4, wherein the regional access information further comprises identification information of a regional access point, and the identification information of the regional access point identifies an available access point in the area.

6. The method according to claim 5, wherein the regional access information comprises at least one of the following information:
routing information of the regional access point, wherein the routing information of the regional access point indicates a routing address of the regional access point; and
service area information of the regional access point, wherein the service area information of the regional access point indicates an area range in which the regional access point is available.

7. The method according to claim 1, wherein the sending, by the policy control function network element, the regional access information to a session management network element comprises:
sending, by the policy control function network element, the regional access information to the session management network element through a mobility management network element.

8. The method according to claim 7, wherein the method further comprises:
sending, by the policy control function network element, session feature information to the mobility management network element, wherein the session feature information is used to determine the session management network element.

9. The method according to claim 8, wherein the session feature information comprises a data network name DNN and/or network slice selection assistance information S-NSSAI.

10. A service access apparatus, comprising:
a processing unit, configured to determine regional access information of a terminal device, wherein the regional access information comprises an identifier of a service in an area; and
a transceiver unit, configured to send the regional access information to a visited session management network element, wherein the regional access information is used by the session management network element to provide access to the service in the area for the terminal device.

11. The apparatus according to claim 10, wherein
the processing unit is specifically configured to receive the regional access information from a network exposure function network element or a unified database network element, or obtain pre-configured regional access information.

12. The apparatus according to claim 10 or 11, wherein
the processing unit is further configured to determine that the terminal device has subscribed to the service.

13. The apparatus according to claim 12, wherein
the transceiver unit is further configured to obtain location information of the terminal device; and
the processing unit is further configured to determine, based on the location information and the regional access information, that the terminal device is in a range of the area.

14. The apparatus according to any one of claims 10 to 13, wherein the regional access information further comprises identification information of a regional access point, and the identification information of the regional access point identifies an available access point in the area.

15. The apparatus according to claim 14, wherein the regional access information comprises at least one of the following information:
routing information of the regional access point, wherein the routing information of the regional access point indicates a routing address of the regional access point; and
service area information of the regional access point, wherein the service area information of the regional access point indicates an area range in which the regional access point is available.

16. The apparatus according to claim 10, wherein the transceiver unit is specifically configured to send the regional access information to the session management network element through a mobility management network element.

17. The apparatus according to claim 16, wherein the transceiver unit is further configured to send session feature information to the mobility management network element, wherein the session feature information is used to determine the session management network element.

18. The apparatus according to claim 17, wherein the session feature information comprises a data network name DNN and/or network slice selection assistance information S-NSSAI.

19. A service access method, comprising:
sending, by a visited policy control function network element, a to-be-replaced DNN list and replacement indication information to an access and mobility management network element, wherein the to-be-replaced DNN list comprises a first DNN, the replacement indication information indicates to replace the first DNN with a second DNN, the first DNN indicates a DNN requested by a terminal device, the second DNN indicates a DNN selected by the policy control function network element for the terminal device, and the policy control function network element is a policy control function network element responsible for access and mobility management;
receiving, by the policy control function network element, the first DNN from the access and mobility management network element; and
sending, by the policy control function network element based on the first DNN, the second DNN to the access and mobility management network element, wherein the second DNN is used by a visited session management network element to provide access to a service in an area for the terminal device.

20. The method according to claim 19, wherein the method further comprises:
determining, by the policy control function network element, that the terminal device has subscribed to the service.

21. The method according to claim 20, wherein the determining, by the policy control function network element, that the terminal device has subscribed to the service comprises:
determining, by the policy control function network element based on subscription information of the terminal device, that the terminal device has subscribed to the service; or
determining, by the policy control function network element based on information from an application function network element, that the terminal device has subscribed to the service; or
determining, by the policy control function network element based on pre-configured regional access information, that the terminal device has subscribed to the service.

22. The method according to any one of claims 19 to 21, wherein the method further comprises:
obtaining, by the policy control function network element, location information and regional access information of the terminal device; and
determining, by the policy control function network element based on the location information and the regional access information of the terminal device, that the terminal device is in a range of the area.

23. The method according to any one of claims 19 to 22, wherein after the terminal device accesses the service in the area, the method further comprises:
determining, by the policy control function network element, that the service of the terminal device expires; and
sending, by the policy control function network element, policy association update information to the access and mobility management network element, wherein the policy association update information indicates to re-establish a session.

24. The method according to claim 23, wherein the determining, by the policy control function network element, that the service of the terminal device expires comprises:
determining, by the policy control function network element based on the subscription information of the terminal device, that the service of the terminal device expires; or
determining, by the policy control function network element based on the information from the application function network element, that the service of the terminal device expires; or
determining, by the policy control function network element based on the pre-configured regional access information, that the service of the terminal device expires.

25. The method according to claim 24, wherein the method further comprises:
obtaining, by the policy control function network element, the location information and the regional access information of the terminal device; and
determining, by the policy control function network element based on the location information and the regional access information of the terminal device, that the terminal device moves out of the range of the area.

26. The method according to claim 25, wherein the method further comprises:
sending, by the policy control function network element, indication information to the access and mobility management network element, wherein the indication information indicates to delete the to-be-replaced DNN list.

27. The method according to any one of claims 19 to 26, wherein after the terminal device accesses the service in the area, the method further comprises:
determining, by the policy control function network element, that the terminal device newly subscribes to a service in the area; and
sending, by the policy control function network element, policy association update information to the access and mobility management network element, wherein the policy association update information indicates to re-establish a session.

28. The method according to claim 27, wherein the determining, by the policy control function network element, that the terminal device newly subscribes to a service in the area comprises:
determining, by the policy control function network element based on the subscription information of the terminal device, that the terminal device newly subscribes to the service in the area; or
determining, by the policy control function network element based on the information from the application function network element, that the terminal device newly subscribes to the service in the area; or
determining, by the policy control function network element based on the pre-configured regional access information, that the terminal device newly subscribes to the service in the area.

29. The method according to claim 28, wherein the method further comprises:
obtaining, by the policy control function network element, the location information and the regional access information of the terminal device; and
determining, by the policy control function network element based on the location information and the regional access information of the terminal device, that the terminal device is in the range of the area.

30. The method according to claim 29, wherein the method further comprises:
sending, by the policy control function network element, indication information to the access and mobility management network element, wherein the indication information indicates to delete the to-be-replaced DNN list.

31. A service access method, comprising:
receiving, by a visited policy control function network element, regional access information, wherein the policy control function network element is a policy control function network element responsible for access and mobility management;
determining, by the policy control function network element based on the regional access information, a user equipment route selection policy URSP rule for a terminal device, wherein the URSP rule comprises indication information, and the indication information indicates that the URSP rule is used by the terminal device to access a service in a visited area; and
sending, by the policy control function network element, the URSP rule to the terminal device.

32. The method according to claim 31, wherein the receiving, by a visited policy control function network element, regional access information comprises:
receiving, by the policy control function network element, the regional access information from an application function network element or a network exposure function network element; or
receiving, by the policy control function network element, the regional access information from a unified database network element.

33. The method according to any one of claims 30 to 32, wherein the URSP rule further comprises a data network name DNN and/or network slice selection assistance information S-NSSAI corresponding to the service that the terminal device accesses in the visited area.

34. A communication system, comprising: the policy control function network element according to any one of claims 1 to 9; and
a visited session management network element that communicates with the policy control function network element, wherein the session management network element is configured to: receive regional access information from the policy control function network element, wherein the regional access information comprises an identifier of a service in an area; and provide access to the service in the area for the terminal device based on the regional access information.

35. The communication system according to claim 34, further comprising a mobility management network element, wherein
the mobility management network element is configured to: receive session feature information from the policy control function network element; determine the session management network element based on the session feature information; receive the regional access information from the policy control function network element; and send the regional access information to the session management network element.

36. A service access method, comprising:
determining, by a visited policy control function network element, regional access information of a terminal device, wherein the regional access information comprises an identifier of a service in an area, and the policy control function network element is a policy control function network element responsible for access and mobility management;
sending, by the policy control function network element, the regional access information to a visited session management network element, wherein the regional access information is used by the session management network element to provide access to the service in the area for the terminal device; and
receiving, by the session management network element, the regional access information.

37. The method according to claim 36, further comprising:
receiving, by a mobility management network element, session feature information from the policy control function network element, and determining the session management network element based on the session feature information;
receiving the regional access information from the policy control function network element; and
sending the regional access information to the session management network element.

38. A visited policy control function network element, comprising a processor and a memory, wherein the memory is configured to store computer-executable instructions, and when the policy control function network element runs, the processor executes the computer-executable instructions stored in the memory, to enable the visited policy control function network element to perform the service access method according to any one of claims 1 to 9, or claims 19 to 33, or claims 36 and 37.

39. A chip system, comprising:
a memory, configured to store a computer program; and
a processor, configured to: invoke the computer program from the memory and run the computer program, to enable a device on which the chip system is installed to perform the service access method according to any one of claims 1 to 9, or claims 19 to 33, or claims 36 and 37.

40. A computer-readable storage medium, comprising a computer program, wherein when the computer program is run on a computer, the computer is enabled to perform the service access method according to any one of claims 1 to 9, or claims 19 to 33, or claims 36 and 37.

41. A computer program product, wherein the computer program product comprises a computer program, and when the computer program is run on a computer, the computer is enabled to perform the service access method according to any one of claims 1 to 9, or claims 19 to 33, or claims 36 and 37.
